# EUROPÄISCHE PATENTSCHRIFT

(11) **EP 0 804 837 B1**
(45) Veröffentlichungstag und Bekanntmachung des Hinweises auf die Patenterteilung: **09.08.2000**
(21) Anmeldenummer: 96900246.8
(22) Anmeldetag: 03.01.1996
(51) Int. Cl.: H04J 3/17

(54) **VERFAHREN ZUR ÜBERTRAGUNG VON SPRACHINFORMATION**
PROCESS FOR TRANSMITTING SPOKEN INFORMATION
PROCEDE POUR LA TRANSMISSION D'INFORMATIONS PARLEES

(30) Priorität: 19.01.1995 DE 19501517
(43) Veröffentlichungstag der Anmeldung: 05.11.1997
(73) Patentinhaber: SIEMENS AKTIENGESELLSCHAFT, 80333 München (DE)
(72) Erfinder: PILLEKAMP, Klaus-Dieter, D-40699 Erkrath (DE)
(86) Internationale Anmeldenummer: DE9600005
(87) Internationale Veröffentlichungsnummer: WO9622640

(56) Entgegenhaltungen:
- US-A- 5 065 395
- US-A- 5 299 198
- NEW ORLEANS SUPERCOMM/ICC '94. SERVING HUMANITY THROUGH COMMUNICATIONS. 1994 IEEE INTERNATIONAL CONFERENCE ON COMMUNICATIONS. CONFERENCE RECORD (CAT. NO.94CH3403-3), PROCEEDINGS OF ICC/SUPERCOMM'94 - 1994 INTERNATIONAL CONFERENCE ON COMMUNICATIONS, N, ISBN 0-7803-1825-0, 1994, NEW YORK, NY, USA, IEEE, USA, Seiten 580-586 vol.1, XP000438980 GANG WU ET AL: "A PRMA integrated voice and data system with data steal into voice (DSV) technique"

## Beschreibung

Die Erfindung betrifft ein Verfahren zur Übertragung von Sprachinformation sowie ein Sendegerät und ein Empfangsgerät entsprechend den Oberbegriffen der Ansprüche 1, 7 und 8.

Bei mobilen Kommunikationsverbindungen zur Sprachübertragung ist zumindest einer der Gesprächsteilnehmer nur über einen Funkkanal erreichbar. Die Sprachinformation wird üblicherweise einschließlich der in ihr enthaltenen Gesprächspausen übertragen. Die Übertragung der Sprachinformation ist im Funkkanal verschiedenartigen Störeinflüssen ausgesetzt, so daß empfängerseitig Störungen auftreten, die die Übertragungsqualität vermindern.

Diese Störungen erreichen z.B. bei digitalen Funkübertragungen nach dem DECT-Standard im Bereich maximaler Reichweiten Bitfehlerraten von 10⁻³ bis 10⁻². Diese Bitfehler sind gleichmäßig über die tatsächliche Sprechzeit und die Sprachpausen verteilt. Für den empfangenden Gesprächsteilnehmer äußern sich die Störungen der Funkübertragung in unangenehmen Störgeräuschen. Übliche Fehlerkorrekturverfahren, wie wiederholtes Aussenden der gestörten Gesprächsabschnitte, sind aufgrund der Echtzeitbedingungen nicht möglich.

Ein Verfahren zur Sprachübertragung ist im Zusammenhang mit DECT-Schnurlostelefonen aus Siemens Components 31, 6(1993) bekannt. Die Übertragung im Funkkanal erfolgt mit digitalen Signalen, wobei die Übertragung der Sprachinformation auch Sprachpausen beinhaltet. Beim sendenden Gerät findet eine A/D-Wandlung der Sprachinformtion und eine Formierung der Sendesignale und beim empfangenden Gerät eine Auswertung der empfangenen Sendesignale und eine D/A-Wandlung statt. Zusätzlich zur Sprachinformation werden auch Steuerinformationen übertragen. Das Verfahren ist entsprechend auch auf Mobilfunkübertragungssysteme übertragbar und dort bekannt. Auch eine Verallgemeinerung auf analoge Übertragungsverfahren der Sprachinformation ist möglich, dabei entfallen die A/D-Wandlung und D/A-Wandlung.

Das erfindungsgemäße Verfahren macht sich die Tatsache zunutze, daß während einer Übertragung eines Gespräches zweier Teilnehmer die tatsächliche Sprechzeit eines einzelnen Teilnehmers im Durchschnitt weit geringer als 50% der Gesprächsdauer ist, also die in der Sprachinformation enthaltenen Sprachpausen einen großen Teil der übertragenen Sprachinformation einnehmen. Ein entsprechend großer Anteil der Bitfehler entfallen auf diese Sprachpausen.

Aus der deutschen Offenlegungsschrift DE 42 36 088 A1 ist es bekannt, die Sprachübertragung für schnurlose Telefone nach dem DECT-Standard zu verbessern, indem die Sprachübertragung zeitweise unterdrückt wird, wenn bestimmte Fehlergrenzwerte überschritten werden. Es ist jedoch nötig, die aufgetretenen Fehler zu bestimmen, was erst beim Empfänger möglich ist.

Weiterhin ist aus Blaesner, W.; "Audioprozessor vereinfacht NF-Signalaufbereitung im Mobilfunk", ntz Bd. 43, 1990, Heft 6, S.446-451 ein Audioprozessor bekannt, der Sprechpausen beim Sender bestimmt und ein Logiksignal zur Abschaltung der Sendeendstufe erzeugt. Damit können die aufgewendete Sendeenergie und die Hindergrundgeräusche verringert werden. Die im Übertragungskanal auftretenden Störungen während der Sprachpausen können jedoch nicht korrigiert werden.

Der Erfindung liegt die Aufgabe zugrunde, das bekannte Verfahren zur Übertragung von Sprachinformation derart weiterzubilden, daß die Qualität der Sprachübertragung verbessert wird, und zugehörige Sende- und Empfangsgeräte anzugeben. Die Lösung der Aufgabe erfolgt ausgehend vom Verfahren nach dem Oberbegriff des Patentanspruches 1 durch dessen kennzeichnenden Merkmale. In unabhängigen Ansprüchen werden weiterhin erfindungsgemäße Sende- und Empfangsgeräte angegeben.

Im Rahmen des erfindungsgemäßen Verfahrens zur Übertragung von Sprachinformation wird im Sendegerät die zu sendende Sprachinformation nach in ihr enthaltenen Sprachpausen analysiert. Die Sprachpausen werden erkannt und jeweils Steuerinformationen erzeugt, die die Zeitlage der Sprachpausen innerhalb der Sprachinformation repräsentieren. Zusätzlich zur Sprachinformation wird die Steuerinformation in dem Sinne zeitgerecht durch den Funkteil über den Funkkanal gesendet, daß im Empfangsgerät die in der Steuerinformation abgebildeten Sprachpausen nach der Auswertung durch das Rechenwerk des Empfangsgerätes in der richtigen Zeitlage in die Sprachinformation eingefügt werden kann.

Die eingefügten, die Sprachpausen realisierenden Signale weisen keine Störungen auf, so verringert das erfindungsgemäße Verfahren die Übertragungsfehler um einen Prozentsatz der in etwa dem Anteil der Sprachpausen an der Sprachinformation entspricht. Für den empfangenden Gesprächsteilnehmer entfallen die Störgeräusche während der Sprachpausen des sendenden Teilnehmers, wodurch ein angenehmeres Hörempfinden erreicht wird. Die Qualität der Sprachübertragung wird spürbar erhöht.

Eine vorteilhafte Weiterbildung des erfindungsgemäßen Verfahrens führt bei der Ermittlung der Sprachpausen einen Vergleich der Länge der Sprachpause mit der Länge eines Rahmens eines Rahmentaktes ein. Die Steuerinformation wird nur dann erzeugt, wenn die Sprachpause länger als die Rahmenlänge ist. Damit ist gewährleistet, daß die Steuerinformation erst bei Vorliegen einer Mindestdauer der Sprachpausen erzeugt wird. Die Steuerinformation kann damit mit der Zeichengebung des Rahmentaktes verbunden werden.

Entsprechend einer vorteilhaften Weiterbildung der Erfindung erfolgt das Einsetzen der Sprachpausen, indem die Stromversorgung des D/A-Wandlers für die Zeitdauer der Sprachpausen unterbrochen wird. Damit ergibt sich der zusätzliche Vorteil einer Energieeinsparung. Ergänzend zur Unterbrechung der Stromversorgung des D/A-Wandlers kann ein in einem Signalgenerator generiertes Rauschsignal anstelle der im D/A-Wandler erzeugten analogen Sprachinformation dem elektrisch-akustischen Wandler zugeführt werden. Die Sprachpausen können damit auf eine für die menschlichen Hörgewohnheiten angenehme Weise gestaltet werden.

Das erfindungsgemäße Verfahren ist nicht nur auf digitale Übertragungsverfahren anwendbar, sondern eignet sich auch bei analoger Übertragung der Sprachinformation im Funkkanal.

Das Verfahren kann so ausgestaltet werden, daß es mit dem bisherigen Verfahren zur Übertragung von Sprachinformation kompatibel ist. Die Steuerinformation (Kodierung und Sendeweise) ist derart an das Übertragungsverfahren der Sprachinformation angepaßt, daß bei einer Kommunikation eines Sendegerätes ohne Mittel zur Erzeugung der Steuerinformation oder eines Empfangsgerätes ohne Mittel zur Auswertung der Steuerinformation die Sprachinformation einschließlich der in ihr enthaltenen Sprachpausen dem elektrisch-akustischen Wandler des Empfangsgerätes zugeführt wird. Sendegerät und Empfangsgerät können damit unabhängig davon, ob beide über Mittel zur Durchführung des erfindungsgemäßen Verfahrens verfügen, zusammenwirken.

Vorteilhafte Ausgestaltungen von Sendegerät und Empfangsgerät zur Durchführung des erfindungsgemäßen Verfahrens sind den weiteren Unteransprüchen zu entnehmen.

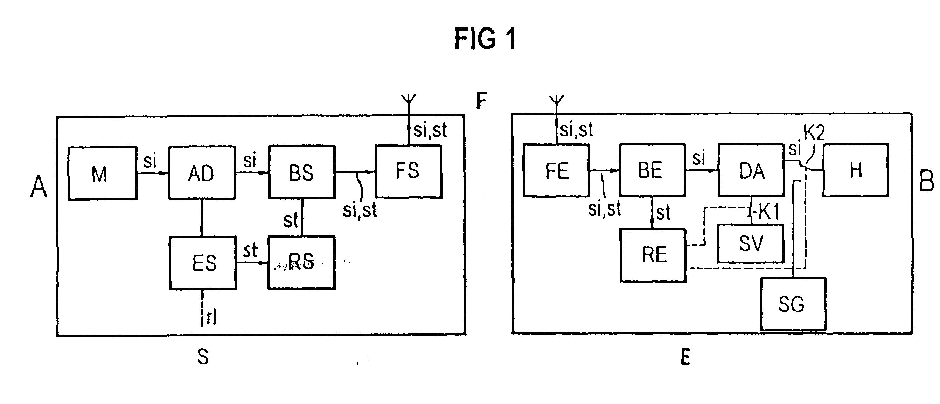

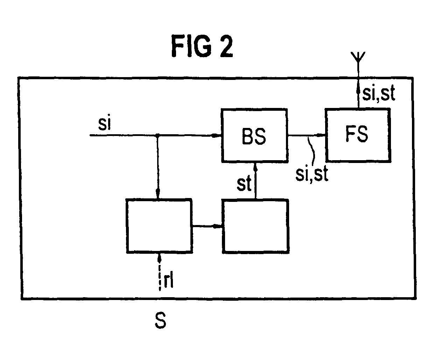

Ausführungsbeispiele sind in den Figuren 1 und 2 dargestellt und werden im folgenden näher erläutert.

Es zeigen
- FIG 1: ein Sendegerät und ein Empfangsgerät zur Durchführung des Verfahrens zur Übertragung der Sprachinformation, und
- FIG 2: eine weitere Ausführungsform des Sendegerätes zur Durchführung des Verfahrens zur Übertragung der Sprachinformation.

Bezüglich des Aufbaus und der wichtigsten Baugruppen einer DECT-Mobilstation und einer Basisstation wird auf Siemens Components 31, 6 (1993) S. 216, verwiesen. Eine Sendeeinrichtung und eine Empfangseinrichtung sind in der Mobilstation integriert. Eine NF-Analogschaltung (PMB 2920) enthält einen A/D- und einen D/A-Wandler. In einem Digitalbaustein (PMB 2720) sind die Funktionen von Rechenwerk und Formierung bzw. Auswertung der Sendesignale enthalten. Ein HF-Sender und ein HF-Empfänger bilden im wesentlichen einen sendenden bzw. empfangenden Funkteil (PMB 2220,PMB 2420).

Das in FIG 1 dargestellte Sendegerät S steht über mindestens einen Funkkanal F mit einem Empfangsgerät E in einer einseitigen Kommunikationsverbindung. Damit ist eine Sprachübertragung vom Gesprächsteilnehmer A zum Gesprächsteilnehmer B gegeben. Zu einer bidirektionalen Übertragung muß jeder der Gesprächsteilnehmer über ein Sendegerät und ein Empfangsgerät verfügen. Des weiteren müssen Funkkanäle F für beide Richtungen zur Verfügung stehen.

Ein akustisch-elektrischer Wandler M im Sendegerät S, z.B. ein Mikrophon, nimmt die Sprachinformation si des Gesprächsteilnehmers A in Form von akustischen Schwingungen auf und wandelt sie in eine analoge elektrische Sprachinformation si um. Mit dem Mikrophon M ist ein A/D-Wandler AD verbunden, in dem die analoge elektrische Sprachinformation si in eine digitalisierte Form umgewandelt wird. Die digitale Sprachinformation wird einem Mittel zur Formierung der Sendesignale BS - Burst-Mode-Logik-Element - und einem Mittel zur Sprachpausenerkennung ES zugeführt. Im Mittel zur Sprachpausenerkennung ES wird des weiteren ein Signal, das die Länge des Rahmentaktes rl enthält, verarbeitet. Das Mittel zur Sprachpausenerkennung ES erzeugt dann eine die Zeitlage der Sprachpausen sp innerhalb der Sprachinformation si repräsentierende Steuerinformation st, wenn die Sprachpause sp zumindest eine Rahmenlänge rl völlig ausfüllt. Einem Rechenwerk RS wird die Steuerinformation st vom Mittel zur Sprachpausenerkennung ES zugeführt. Im Mittel zur Formierung der Sendesignale BS, das mit dem A/D-Wandler AD und dem Rechenwerk RS verbunden ist, werden die Sprachinformation si und die Steuerinformation st enthaltenden Sendesignale geformt. Das beim DECT-Standard als A-Feld bezeichnete Feld für Steuerinformationen eines Rahmentaktes nimmt die im Rechenwerk RS vorbereitete Steuerinformation st auf. Die Steuerinformation st wird auf Bitpositionen geschrieben, die von Verfahren gemäß DECT-Standard nicht genutzt werden. Eine einzige Bitposition im A-Feld eines jeden gesendeten Rahmens bestimmt, ob der Rahmen von einer Sprachpause sp voll ausgefüllt ist - z.B. Bit ist logisch "1" oder ob der Rahmen zumindesten teilweise gesprochene Information enthält - Bit ist logisch "0". Das Mittel zur Formierung der Sendesignale BS führt die Sprachinformation si und die Steuerinformation st einem Funkteil FS zu, das die Informationen über einen Funkkanal F absendet.

Das Empfangsgerät E nimmt die Sprachinformation si und die Steuerinformation st aus dem Funkkanal F über ein Funkteil FE auf. Mit dem Funkteil FE ist ein Mittel zur Auswertung der empfangenen Sendesignale BE verbunden. Von diesem Mittel zur Auswertung der empfangenen Sendesignale BE übernimmt ein Rechenwerk RE die Steuerinformation st und ein D/A-Wandler DA die Sprachinformation si.

Die Stromversorgung SV des D/A-Wandlers DA ist über den Kontakt K1 abschaltbar. Der D/A-Wandler DA wandelt die empfangenen digitalisierten Sprachinformation si in analoge Sprachinformationen si um und führt sie über einen Umschalter K2 einem elektrisch-akustischen Wandler H, z.B. einer Hörkapsel, zu. Vom elektrisch-akustischen Wandler H empfängt der Gesprächsteilnehmer B die Sprachinformation si durch akustische Schwingungen. Der durch das Rechenwerk RE gesteuerte Umschalter K2 verbindet den elektrisch-akustischen Wandler H wahlweise mit dem D/A-Wandler DA oder einem Signalgenerator SG. Der Signalgenerator SG erzeugt ein Rauschsignal. Dieses Rauschsignal hat für den empfangenden Gesprächsteilnehmer B eine angenehme, die Sprachpause repräsentierende Klangfarbe.

Das Rechenwerk RE wertet die Steuerinformation st aus und setzt die Sprachpausen sp zeitrichtig in die Sprachinformation si ein. Dazu wird durch das Rechenwerk RE die Öffnung des Kontaktes K1 und gleichzeitig das Umschalten des Umschalters K2 von der Verbindung mit dem D/A-Wandler DA auf den Signalgenerator SG veranlaßt. Der D/A-Wandler DA befindet sich damit in Ruhestellung und dem elektrisch-akustischen Wandler H wird das Rauschsignal für eine die Dauer der Sprachpausen sp repräsentierende Anzahl von Rahmentakten zugeführt. Am Ende der Sprachpausen sp wird der Kontakt K1 wieder geschlossen und der Umschalter K2 verbindet den D/A-Wandler DA wiederum mit dem elektrisch-akustischen Wandler H; die keine Sprachpausen sp enthaltende Sprachinformation si wird somit wieder übertragen.

FIG 2 zeigt ein weiteres Ausführungsbeispiel für das Sendegerät S. Der Aufbau unterscheidet sich vom in FIG 1 dargestellten Sendegerät S im Prinzip nur dadurch, daß dem Sendegerät S schon die digitalisierte Sprachinformation si zugeführt wird. Ein akustisch-elektrischer Wandler M und ein A/D-Wandler AD können somit entfallen. Die digitalisierte Sprachinformation si wird dem Mittel zur Sprachpausenerkennung ES und dem Mittel zur Erzeugung der Sendesignale BS direkt zugeführt. Diese Form des Sendegerätes S ist für Basisstationen in Mobil- oder Schnurlos-Kommunikationssystemen geeignet.

## Patentansprüche

1. Verfahren zur Übertragung von Sprachinformationen (si) zwischen einem ein Rechenwerk (RS) und einen Funkteil (FS) enthaltenden Sendegerät (S) und einem ein Funkteil (FE), ein Rechenwerk (RE) und einen elektrisch-akustischen Wandler (H) enthaltenden Empfangsgerät (E) über wenigstens einen Funkkanal (F), wobei
- im Sendegerät (S) Sprachpausen (sp) innerhalb der Sprachinformation (si) ermittelt werden und
- eine die Zeitlage der Sprachpausen (sp) innerhalb der Sprachinformation (si) repräsentierende Steuerinformation (st) erzeugt wird,
**dadurch gekennzeichnet,**
- daß die Steuerinformation (st) zusätzlich zur Sprachinformation (si) zeitgerecht durch den Funkteil (FS) über den Funkkanal (F) gesendet wird und
- daß im Empfangsgerät (E) das Rechenwerk (RE) die Steuerinformation (st) derart auswertet, daß die Sprachpausen (sp) zeitrichtig in die Sprachinformation (si) eingefügt werden.

2. Verfahren nach Anspruch 1,
**dadurch gekennzeichnet,**
daß im Sendegerät (S) bei der Ermittlung der Sprachpausen (sp) deren Dauer mit einer Rahmenlänge (rl) eines Rahmentaktes verglichen wird und nur dann die Steuerinformation (st) erzeugt wird, wenn die Sprachpause (sp) länger als die Rahmenlänge (rl) ist.

3. Verfahren nach einem der Ansprüche 1 oder 2,
**dadurch gekennzeichnet,**
daß zum zeitrichtigen Einfügen der Sprachpausen (sp) in die Sprachinformation (si) das dem Empfangsgerät (E) zugeordnete Rechenwerk (RE) die Stromversorgung eines D/A-Wandlers (DA) für die Dauer der Sprachpausen (sp) unterbricht.

4. Verfahren nach einem der Ansprüche 1 bis 3,
**dadurch gekennzeichnet,**
daß zum zeitrichtigen Einfügen der Sprachpausen (sp) in die Sprachinformation (si) das dem Empfangsgerät (E) zugeordnete Rechenwerk (RE) ein in einem Signalgenerator (SG) erzeugtes Rauschsignal dem elektrisch-akustischen Wandler (H) zuführen läßt.

5. Verfahren nach einem der Ansprüche 1 bis 4,
**dadurch gekennzeichnet,**
daß die Übertragung der Sprachinformation (si) und der Steuerinformation (st) über den Funkkanal (F) in digitalisierter Form erfolgt.

6. Verfahren nach einem der Ansprüche 1 bis 5,
**dadurch gekennzeichnet,**
daß die Steuerinformation (st) derart in ein Übertragungsprotokoll des Übertragungsverfahren der Sprachinformation (si) eingefügt wird, daß bei einer Kommunikation eines Sendegerätes (S) ohne Mittel zur Erzeugung der Steuerinformation (st) oder eines Empfangsgerätes (E) ohne Mittel zur Auswertung der Steuerinformation (st) nur die Sprachinformation (si) einschließlich der in ihr enthaltenen Sprachpausen (sp) dem elektrisch-akustischen Wandler (H) des Empfangsgerätes (E) zugeführt wird.

7. Ein ein Rechenwerk (RS) und einen Funkteil (FS) enthaltendes Sendegerät (S) zur Durchführung des Verfahrens nach einem der Ansprüche 1 bis 6,
wobei dem Sendegerät (S) Mittel zur Sprachpausenerkennung (ES) der in der Sprachinformation (si) befindlichen Sprachpausen (sp) zugeordnet sind, die im Zusammenwirken mit dem Rechenwerk (RS) die Zeitlage der Sprachpausen (sp) innerhalb der Sprachinformation (si) repräsentierende Steuerinformation (st) erzeugen,
**dadurch gekennzeichnet,**
daß daß ein dem Sendegerät (S) zugeordnetes Mittel zur Formierung der Sendesignale (BS) derart ausgebildet ist, daß die Steuerinformation (st) zusätzlich zur Sprachinformation (si) zeitgerecht durch den Funkteil (FS) über den Funkkanal (F) gesendet wird.

8. Ein ein Funkteil (FE), ein Rechenwerk (RE), einen D/A-Wandler (DA) und einen elektrisch-akustischen Wandler (H) enthaltendes Empfangsgerät (E) zur Durchführung des Verfahrens nach einem der Ansprüche 1 bis 6,
**dadurch gekennzeichnet,**
daß die Mittel des Empfangsgerätes (E) derart ausgebildet sind, daß die Steuerinformation (st) im Rechenwerk (RE) ausgewertet wird und die Sprachpausen (sp) in die Sprachinformation (si) zeitrichtig eingefügt werden.

## Claims

1. Method for transmitting voice information (si) between a transmitter unit (S), containing an arithmetic unit (RS) and a radio component (FS), and a receiver unit (E), containing a radio component (FE), an arithmetic unit (RE) and an electro-acoustic transducer (H), on at least one radio channel (F),
- voice pauses (sp) within the voice information (si) being determined in the transmitter unit (S), and
- an item of control information (st) which represents the timing position of the voice intervals (sp) within the voice information (si) being generated,
characterized
- in that the control information (st) is transmitted, in addition to the voice information (si), by the radio component (FS) on the radio channel (F) at the appropriate time, and
- the arithmetic unit (RE) evaluates the control information (st) in the receiver unit (E) in such a way that the voice pauses (sp) are inserted into the voice information (si) at the correct time.

2. Method according to Claim 1, characterized in that during the determination of the voice pauses (sp), the duration of said voice pauses is compared in the transmitter unit (S) with a frame length (r1) of a frame clock, and the control information (st) is generated only if the voice pause (sp) is longer than the frame length (r1).

3. Method according to one of Claims 1 or 2, characterized in that in order to insert the voice pause (sp) into the voice information (si) at the correct time the arithmetic unit (RE) which is associated with the receiver unit (E) interrupts the power supply of a D/A converter (DA) for the duration of the voice pauses (sp).

4. Method according to one of Claims 1 to 3, characterized in that in order to insert the voice pauses (sp) into the voice information (si) at the correct time, the arithmetic unit (RE) which is assigned to the receiver unit (E) causes a noise signal generated in a signal generator (SG) to be fed to the electro-acoustic transducer (H).

5. Method according to one of Claims 1 to 4, characterized in that the transmission of the voice information (si) and of the control information (st) on the voice channel (F) takes place in digitized form.

6. Method according to one of Claims 1 to 5, characterized in that the control information (st) is inserted into a transmission protocol of the transmission method of the voice information (si) in such a way that in the case of a communication of a transmitter unit (S) without means for generating the control information (st) or a receiver unit (E) without means for evaluating the control information (st), only the voice information (si) including the voice pauses (sp) contained in it is fed to the electro-acoustic transducers (H) of the receiver unit (E).

7. Transmitter unit (S), containing an arithmetic unit (RS) and a radio component (FS), for carrying out the method according to one of Claims 1 to 6, voice pause detection means (ES) for detecting voice pauses (sp) located in the voice information (si) being assigned to the transmitter unit (S), said means generating, through interaction with the arithmetic unit (RS), the timing position of the voice intervals (sp) within the control information (st) representing voice information (si), characterized in that a means, assigned to the transmitter unit (S), forming the transmit signals (BS) being embodied in such a way that the control information (st) is transmitted, in addition to the voice information (si), on the radio channel (F) by the radio component (FS) with appropriate timing.

8. Receiver unit (E), containing a radio component (FE), an arithmetic unit (RE), a D/A converter (DA) and an electro-acoustic converter (H), for carrying out the method according to one of Claims 1 to 6, characterized in that the means of the receiver unit (E) are embodied in such a way that the control information (st) is evaluated in the arithmetic unit (RE) and the voice pauses (sp) are inserted into the voice information (si) with correct timing.

## Revendications

1. Procédé pour la transmission d'informations vocales (si), via au moins un canal radio (F), entre un appareil émetteur (S), qui renferme un calculateur (RS) et un bloc radio (FS), et un appareil récepteur (E), qui renferme un bloc radio (FE), un calculateur (RE) et un convertisseur électro-acoustique (H),
- des pauses vocales (sp) étant détectées, dans l'appareil émetteur (S), à l'intérieur de l'information vocale (si) et
- une information de commande (st), qui représente la position dans le temps des pauses vocales (sp) à l'intérieur de l'information vocale (si), étant générée,
**caractérisé par le fait**
- que l'information de commande (st) est émise en temps utile par le bloc radio (FS) sur le canal radio (F) en complément à l'information vocale (si) et
- que, dans l'appareil récepteur (E), le calculateur (RE) analyse l'information de commande (st) de telle sorte que les pauses vocales (sp) sont insérées, à l'instant correct, dans l'information vocale (si).

2. Procédé selon la revendication 1
**caractérisé par le fait**
que, dans l'appareil émetteur (S), lors de la détection des pauses vocales (sp), leur longueur est comparée à la longueur de trame (rl) d'un rythme de trame et que l'information de commande (st) n'est générée que si la pause vocale (sp) est plus longue que la longueur de la trame (rl).

3. Procédé selon l'une des revendications 1 ou 2
**caractérisé par le fait**
que, pour l'insertion à l'instant correct des pauses vocales (sp) dans l'information vocale (si), le calculateur (RE) affecté à l'appareil récepteur (E) interrompt l'alimentation en courant d'un convertisseur numérique/analogique (DA) pour la durée des pauses vocales (sp).

4. Procédé selon l'une des revendications 1 à 3
**caractérisé par le fait**
que, pour l'insertion à l'instant correct des pauses vocales (sp) dans l'information vocale (si), le calculateur (RE) affecté à l'appareil récepteur (E) fait parvenir au convertisseur électro-acoustique (H) un signal de bruit généré dans un générateur de signal (SG).

5. Procédé selon l'une des revendications 1 à 4
**caractérisé par le fait**
que la transmission de l'information vocale (si) et de l'information de commande (st) se fait sous forme digitalisée sur le canal radio (F).

6. Procédé selon l'une des revendications 1 à 5
**caractérisé par le fait**
que l'information de commande (st) est insérée dans un protocole de transmission du procédé de transmission de l'information vocale (si) de telle sorte que, lors d'une communication d'un appareil émetteur (S) sans moyen pour générer l'information de commande (st) ou d'un appareil récepteur (E) sans moyen pour analyser l'information de commande (st), seule l'information vocale (si), y compris les pauses vocales (sp) qu'elle comporte, est amenée au convertisseur électro-acoustique (H) de l'appareil récepteur (E).

7. Un appareil émetteur (S) renfermant un calculateur (RS) et un bloc radio (FS) pour l'exécution du procédé selon l'une des revendications 1 à 6,
des moyens (ES) pour la détection des pauses vocales (sp), qui se trouvent dans l'information vocale (si), étant affectés à l'appareil émetteur (S) pour générer, en coopération avec le calculateur (RS), l'information de commande (st) qui représente la position dans le temps des pauses vocales (sp) à l'intérieur de l'information vocale (si),
**caractérisé par le fait**
qu'un moyen attribué à l'appareil émetteur (S) pour façonner les signaux d'émission (BS) est conçu de telle sorte que l'information de commande (st) est émise en temps utile, en plus de l'information vocale (si), par le bloc radio (FS) sur le canal radio (F).

8. Un appareil récepteur (E) renfermant un bloc radio (FE), un calculateur (RE), un convertisseur numérique/analogique (DA) et un convertisseur électro-acoustique (H) pour l'exécution du procédé selon l'une des revendications 1 à 6,
**caractérisé par le fait**
que les moyens de l'appareil récepteur (E) sont conçus de telle sorte que l'information de commande (st) est analysée dans le calculateur (RE) et que les pauses vocales (sp) sont insérées à l'instant correct dans l'information vocale (si).
